# EUROPEAN PATENT APPLICATION

(11) **EP 4 008 445 A1**
(43) Date of publication of application: **08.06.2022**
(21) Application number: 21181119.5
(22) Date of filing: 23.06.2021
(51) Int. Cl.: B09B 5/00, B01D 25/12

(54) **MACHINERY FOR PRODUCING BIOPLASTIC MATERIAL**

(30) Priority: 03.12.2020 IT 202000029696
(71) Applicant: Splastica S.r.l., 00045 Genzano di Roma RM (IT)
(72) Inventor: Gatto, Emanuela, 00045 Genzano di Roma (RM) (IT); Lettieri, Raffaella, 00018 Palombara Sabina (RM) (IT); Armuzza, Valentina, 51429 Bergisch Gladbach (DE)
(74) Representative: Perani & Partners S.p.A.

(57) **Abstract**

Machinery (1) for producing bioplastic material, comprising: a first container (2) having a first cavity (21) extending between a first bottom (22) and an opposite first opening (23) along a longitudinal direction (X-X); a second container (3) arranged within the first cavity (21) and defining a second cavity (31) configured to receive and contain reagents and washing solutions for the production of the bioplastic material, the second container (3) comprises a filter (34) which is configured to place the second cavity (31) and the first cavity (21) in fluid communication; a support (4) associated with the first container (2) and comprising a piston (41) movable along the longitudinal direction (X-X) for compressing the bioplastic material produced in the second cavity (31) after the insertion of the reagents and the washing solutions in such second cavity (31) so as to eliminate through the filter (34) waste products from the produced bioplastic material when the first (21) and the second cavity (31) are in fluid communication with each other.

## Description

### Technical field

The present invention relates to a machinery for producing bioplastic material such as, for example, a bioplastic material based on natural substances, in particular, a bioplastic material containing milk proteins, preferably caseins.

### State of the art

An increasing awareness has globally developed over the years on the threat represented by the growing consumption of plastics and their subsequent accumulation on the planet.

The concept of the circular economy is currently seen as crucial to solve the problem of environmental protection. According to the principles of the circular economy, it is necessary to find ways to reintegrate biological materials into the biosphere.

One of the basic principles of the circular economy is eco-design, i.e. the idea of making products by considering, right from the design step, what they will be used for at the end of their life.

An alternative to the use of synthetic polymers are natural polymers. In the process of biodegradation, the organic material is degraded through the activity of micro-organisms, sunlight and other natural physical agents, which transform the organic starting substances into simple molecules that are fully assimilated by the environment. The biological processes involved can take place under aerobic or anaerobic conditions. In the first case the end products are carbon dioxide and water, while in the second case methane is also formed. In nature, every material undergoes a process of biodegradation, which can take a very long time and is influenced by environmental conditions (such as temperature).

Compostability is instead defined in detail by the European standard UNI EN 13432, which describes the requirements that a material must have in order to be defined as COMPOSTABLE and the relevant standard tests for confirmation. For a material to be compostable it must:
1) be biodegradable, reaching a level of biodegradation of at least 90% within 6 months;
2) disintegrate, under composting conditions, into fragments that are no longer visible and distinguishable in the final compost within 3 months. Fragments larger than 2 mm are allowed up to a maximum of 10 % of the initial mass;
3) show no negative effect on the composting process;
4) comply with clearly defined maximum levels of heavy metals added to the material. Plant germination trials have been carried out, for example, to check that no toxicity effects occur;
5) the compost obtained must comply with clearly defined limits of pH values, salt content, concentrations of volatile solids and nitrogen, phosphorus, magnesium and potassium.

The idea underlying the development of compostable polymers made from renewable sources originates from the cycle of nature: most of the organic material generated through photosynthesis (more than 60 million tonnes) is reconverted by the action of micro-organisms into the starting products, CO₂ and water.

In addition to the remarkable environmental impact, the use of biodegradable and compostable plastics can provide a solution to the increasingly expensive problems of post-use disposal.

The main problem hindering the spread of bioplastics for the time being is the price, which is higher than synthetic plastics, but if the price of the latter included also their actual disposal cost, the difference would not be so significant.

The dairy sector is one of the sectors where the issue of environmental sustainability of processes, recovery and recycling is very important, considering the volume of waste and by-products the industry has to deal with and the costs of their disposal. It is well known that waste materials from the dairy sector can be used for producing bioplastic.

A method is also known in the state of the art for producing bioplastics using, in addition to waste material such as from the dairy sector, suitable additional reagents and washing solutions. The method of the prior art involves, after the step of treating with reagents and washing solutions, a step of purifying the product obtained to eliminate any waste products.

A machine for the production of bioplastic material is known to exist for this purpose. This bioplastic production machinery comprises a section in which the reagents are duly mixed by means of stirring means and a section in which the waste products are eliminated from the bioplastic.

In particular, the section of the machinery for producing bioplastic material responsible for purification includes a centrifuge. The product to be purified is introduced in the centrifuge and, by applying a centrifugal action to the product to be purified, waste products are separated therefrom and are thus eliminated. The use of a centrifuge to purify bioplastic is disclosed in the Italian patent No. 102018000009834.

Machinery are also known for applications other than the production of bioplastics.

For example, document EP0702231A1 discloses a device for carrying out a chromatography process. This device comprises a chromatography column, a piston that can be moved along the column and two containers connected to the column by respective channels. The column also comprises a discharge outlet arranged at the bottom of such column, near which a filter is arranged. The movement of the piston forces the reagents inside the column to pass through the filter and enter the discharge outlet.

For example, document CN106582092A discloses a pressure filtering device used in the process of producing superoxide dismutase (SOD) from yak blood. Such filtering device comprises a cylinder within which a piston is free to slide and a filter which allows liquid-solid separation downstream of compression. Furthermore, the cylinder of the filtering device is placed inside a container which allows to collect any leakages of liquids from the holes arranged along the cylinder wall.

Document CN108014514A discloses a device for filtering and discharging dross. In particular, such a filtering device comprises a cylindrical container, closed at the ends by means of a top cover and a bottom cover, and a discharge channel 7. In addition, such filtering device comprises a piston 4 which can be moved along the cylindrical container, so as to force the liquid inserted through a side opening to pass through a filter.

Document US5167271A discloses a device for eliminating liquids from a mixture. Such device for eliminating liquids comprises a cylindrical container provided with a filter and a piston, which has the function of compressing the mixture placed inside the container in order to eliminate the percentage of excess liquid inside the mixture.

Finally, documents EP0344152A1 and EP2106435A2 disclose machinery using different tools, associated with different sections of the machinery arranged one after the other to allow mixing and subsequently compressing materials.

### Problem of the prior art

However, the known art machinery for producing bioplastic material takes a long time to produce bioplastics. Indeed, eliminating waste products from bioplastic material using the centrifugal action requires several centrifugation cycles before the resulting bioplastic material has suitable characteristics for shaping.

In addition, centrifugation involves applying additional steps so that the mechanical properties of the resulting bioplastic material are optimal. Indeed, centrifugation, for example, tends to "chop up" the wet precursor of the bioplastic material, which will consequently compact with more difficulty.

In addition, the prior art bioplastic production machinery is bulky. In fact, it is difficult to build a compact and therefore possibly portable machinery when separate sections for mixing the reagents and purifying the bioplastic material are provided.

Furthermore, documents EP0702231A1, CN106582092A, CN108014514A, US5167271A, EP0344152A1 and EP2106435A2 disclose machinery designed for applications related to technical fields other than bioplastic production and therefore not suitable for the typical bioplastic production working conditions.

### Summary of the invention

In this context, the technical task underlying the present invention is to provide a machinery for producing bioplastic material that overcomes the problems of the prior art.

In particular, it is the purpose of the present invention to propose a machinery for producing bioplastic material that allows to obtain a bioplastic material with mechanical properties similar to those of conventional plastics.

In addition, it is the purpose of the present invention to propose a machinery for producing bioplastic material that is compact and therefore has a reduced size.

The defined technical task and the specified objects are substantially achieved by a machinery comprising the technical characteristics set forth in one or more of the appended claims.

### Advantages of the invention

By means of a preferred embodiment of the invention, it is possible to make a machine for producing bioplastic that enables to produce a bioplastic material provided with suitable mechanical properties, allowing the resulting bioplastic to be compared in terms of performance to conventional plastics.

Thanks to the preferred embodiment of the invention, it is also possible to limit the size of the bioplastic production machine, thus possibly making it a portable machine.

### BRIEF DESCRIPTION OF THE DRAWINGS

Further characteristics and advantages of the present invention will become more apparent from the approximate and thus non-limiting description of a preferred, but not exclusive, embodiment of a machinery for producing bioplastic material, as shown in the accompanying drawings, wherein:

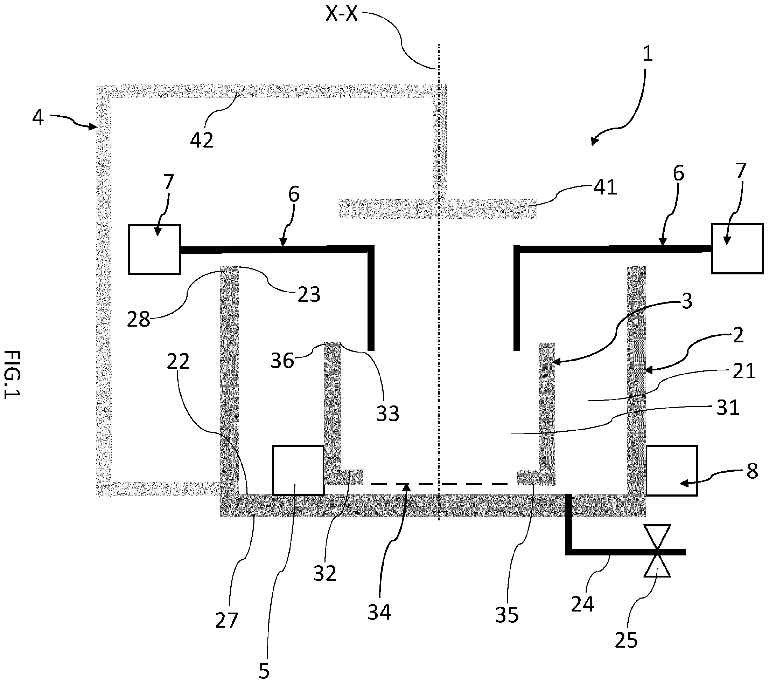

- Figure 1 is a schematic representation of a machinery according to the present invention;

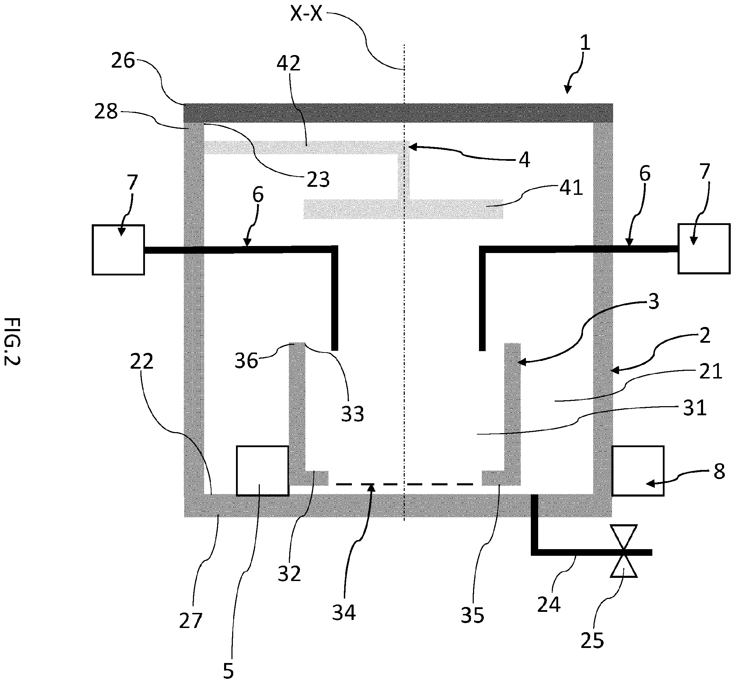

- Figure 2 is a schematic representation of an alternative embodiment of the machinery of Figure 1.

### DETAILED DESCRIPTION

With particular reference to the enclosed figures, number 1 denotes a machinery for producing bioplastic material.

The machinery 1 comprises a first container 2 having a first cavity 21 extending between a first bottom 22 and an opposite first opening 23 along a longitudinal direction X-X.

Preferably, the first container 2 extends between a first base 27 and an opposite first top 28 along the longitudinal direction X-X. The first bottom 22 is located at the first base 27, while the first opening 23 is located at the first top 28.

In addition, the machinery 1 comprises a second container 3 arranged within the first cavity 21 and defining a second cavity 31 configured to receive and contain reagents and washing solutions for producing the bioplastic material. As will become clearer below, after the insertion of reagents and washing solutions into the second cavity 31 and after suitable treatment steps, the formation of the bioplastic material takes place inside the second cavity 31.

Preferably, the second container 3 extends between a second base 35 and an opposite second top 36 along the longitudinal direction X-X.

Still preferably, the second cavity 31 extends between a second bottom 32 and an opposite second opening 33 along the longitudinal direction X-X. Preferably, the second bottom 32 is placed at the second base 35 and the second opening 33 is placed at the second top 36.

In addition, the second container 3 comprises a filter 34. Such filter 34 is configured to put the second cavity 31 and the first cavity 21 in fluid communication.

In other words, as will become clearer below, the machinery 1 is switchable between a first configuration in which the first 21 and the second cavity 31 are not in fluid communication with each other, i.e. are sealingly separated, and a second configuration in which the first 21 and the second cavity 31 are in fluid communication with each other via the filter 34.

Preferably, the filter 34 comprises a mesh made of a porous fabric such as, for example, cotton, hemp, blotting paper or metal or both.

The machinery 1 further comprises a support 4 associated with the first container 2 and comprising a piston 41.

Preferably, the support 4 comprises a mechanical arm 42 connected to the first container 2 and the piston 41 is mounted on the mechanical arm 42. Still preferably, the mechanical arm 42 is connected to the second container 2 outside the first cavity 21 or inside the first cavity 21.

The piston 41 is movable along the longitudinal direction X-X to compress the bioplastic material produced in the second cavity 31 after the insertion of the reagents and washing solutions in said second cavity 31 so as to eliminate, via the filter 34, waste products from the produced bioplastic material, when the first 21 and the second cavity 31 are in fluid communication with each other. In the present description, waste products are basically liquids resulting from treatments with reagents and washing solutions and must be eliminated for the bioplastic material to be used.

Preferably, the machinery 1 comprises motor means (not shown) and configured to move the piston 41 along the longitudinal direction X-X. Alternatively, the motor means are configured to move the mechanical arm 42 such that it moves the piston 41 along the longitudinal direction X-X.

The piston 41 can therefore move closer to the second bottom 32, to compress the bioplastic material produced in the second cavity 31.

When the machinery 1 is in the second configuration, the movement of the piston 41 along the longitudinal direction X-X closer to the second bottom 32 allows the piston 41 to compress the bioplastic material formed within the second cavity 31, enabling waste products to pass from the second 31 to the first cavity 21 via the filter 34.

In addition, the piston 41 can move away from the second bottom 32 in order to remove the bioplastic material from the second cavity 31.

It should be noted that the piston 41 allows the bioplastic material formed in the second cavity 31 to be compressed at a pressure level between 1,000 and 3·10⁸ Pa, preferably between 1,000 and 60,000,000 Pa, preferably between 1,000 and 12,000,000 Pa, preferably between 1,000 and 300,000 Pa, preferably between 1,000 and 60,000 Pa, preferably between 1,000 and 12,000 Pa, preferably between 1,000 and 6,000 Pa.

This specific pressure range not only allows waste products to be eliminated, but it is also responsible for the mechanical properties of the resulting bioplastic material. In fact, after compression, it is possible to obtain a bioplastic material that is substantially non-porous and whose properties are comparable to those of traditional plastics.

According to the preferred embodiment of the invention, the support 4 comprises stirring means (not shown in the appended figures) which can be inserted into the second cavity 31 and configured to mix the reagents that can be contained in the second cavity 31. Preferably, such stirring means are mounted on the mechanical arm 42.

For example, when the machinery 1 is in the first configuration and the reagents are inserted in the second cavity 31, such stirring means mix the reagents to promote the production of the bioplastic inside the second cavity 31. As the first 21 and the second cavity 31 are separated in the first configuration of the machinery 1, the reagents remain contained within the second cavity 31 even while such reagents are mixed by stirring means.

Again, as an example, such stirring means comprise a rod with a spatula. Such rod can move along the longitudinal direction X-X closer to the second bottom 32 to insert the spatula into the second cavity 31 and is movable around the longitudinal direction X-X to mix the reagents by means of the spatula. At the same time, the arm can move along the longitudinal direction X-X away from the second cavity 31 in order to extract the spatula from the second cavity 31.

Always according to the preferred embodiment of the invention, the support 4 is movable between a first alignment position in which the stirring means are aligned with the second cavity 31 and a second alignment position in which the piston 41 is aligned with the second cavity 31. More preferably, the mechanical arm 42 is movable to switch the support 4 between the first and second alignment position.

For example, when the machinery 1 is in the first configuration, the support 4 is kept in the first alignment position such that, once the reagents are inserted into the second cavity 31, the stirring means can mix those reagents. Again, as an example, when the machinery 1 is in the second configuration, the support 4 is kept in the second alignment position so that, after adding the washing solutions to the reagents in the second cavity 31, the piston 41 can compress the produced bioplastic material to eliminate waste products.

Preferably, the support 4 comprises one or more tools for controlling the production of the bioplastic material. For example, the support 4 comprises a thermometer (not shown) for measuring the temperature level within the first cavity 21 and/or a viscometer (not shown). The thermometer and viscometer are known to the person skilled in the art and will therefore not be described further.

According to the preferred embodiment of the invention, the machinery 1 comprises movement means 5. Such movement means 5 are configured to move the second container 3 along the longitudinal direction X-X. For example, the movement means 5 are configured to move the second container 3 between a first position, wherein the second base 35 of the second container 3 is placed in contact with the first bottom 22 of the first container 2, and a second position wherein the second base 35 is spaced apart from the first bottom 22 along the longitudinal direction X-X.

It should be noted that the movement of the second container 3 between the first and second positions allows the machinery 1 to switch from the first to the second configuration. In other words, in the first configuration the second container 3 is in the first position, while in the second configuration the second container 3 is in the second position.

In addition, the movement means 5 are configured to rotate the second container 3 about the longitudinal direction X-X. The rotation of the second container 3 by the movement means 5 encourages the mixing of the reagents which can be inserted in the second cavity 31.

The filter 34 is preferably arranged at the second bottom 32. In other words, the filter 34 is arranged at the second base 35. More preferably, the filter 34 constitutes the second bottom 32.

For example, when the machinery 1 is in the first configuration and therefore the second container 3 is in the first position, the filter 34 is placed in contact with the first bottom 22, thus preventing fluid communication between the first 21 and the second cavity 31. Conversely, when the machinery 1 is in the second configuration, the filter 34 is spaced apart from the first bottom 22 along the longitudinal direction X-X, thereby allowing fluid communication between the first 21 and the second cavity 31.

According to the preferred embodiment of the invention, the first container 2 comprises a discharge outlet 24 in fluid communication with the first cavity 21 and a tap 25 associated with the discharge outlet 24.

Said discharge outlet 24 is configured to receive waste products from the production of the bioplastic material and to convey said waste products outside the first container 2 when the tap 25 is operated. Preferably, the first bottom 22 has a concave profile to ease conveying waste products to the discharge outlet 24.

According to an aspect, the machinery 1 comprises at least one introduction channel 6 in fluid communication with the second cavity 31. Said introduction channel 6 is configured to introduce one or more reagents and washing solutions into the second cavity 31. Preferably, the machinery 1 comprises an introduction channel 6 for each reagent and washing solution required for the production of the bioplastic material.

In addition, the machinery 1 comprises at least one doser 7 associated with the introduction channel 6. The doser 7 is configured to regulate the amount of reagents and washing solutions to be inserted into the second cavity 31. Still preferably, the machinery 1 comprises a doser 7 for each introduction channel 6. Each doser 7 allows to introduce the predetermined amount of reagent or washing solution required to produce the bioplastic material.

According to the preferred embodiment of the invention, the machinery 1 comprises a thermostat 8. This thermostat 8 is configured to regulate the temperature level within the first cavity 21. Being the second container 3 inserted inside the first cavity 21, the thermostat 8 also allows the temperature of the second container 3 to be regulated. Advantageously, the thermostat 8 allows the optimal temperature level to be set inside the first cavity 21 and the second cavity 31 depending on the bioplastic material production step.

According to an aspect, the machinery 1 comprises a control unit (not shown in the accompanying figures). This control unit is in signal communication with the movement means 5 to control such movement means 5. At the same time, the control unit is connected to the motor means configured to move the piston 41 and the stirring means. Advantageously, it is possible, by means of the control unit, to automate the operation of machinery 1 and consequently the production of the bioplastic material.

According to one aspect, the machinery 1 includes a cover 26 configured to reversibly close the first opening 23. Advantageously, by means of the cover 26, the first cavity 21 is isolated from the environment outside the machinery 1.

According to a first embodiment of the invention, the machinery 1 comprises an extruder (not shown in the accompanying figures) for producing pellets. This extruder comprises a cylindrical body extending between two opposite ends along an extension axis. This cylindrical body defines a cylindrical chamber and has an inlet opening and an outlet opening. The inlet opening is configured to feed the bioplastic material into the cylindrical chamber and is preferably positioned on the surface of the cylindrical body, parallel to the extension axis. The outlet opening is placed near one end of the cylindrical body and is preferably arranged perpendicular to the extension axis. The outlet opening is configured to release the bioplastic material from the cylindrical chamber.

In addition, the extruder includes a propeller positioned in the cylindrical chamber and configured to move along the extension axis of the cylindrical body during rotation, in a direction from the inlet opening to the outlet opening to feed the bioplastic material towards the outlet opening. The outlet opening is provided with a perforated plate from which the bioplastic material exits in the form of pellets. The diameter of the pellets can be regulated by selecting a perforated plate with a predetermined mesh size.

Finally, the extruder includes a blade placed near the outlet opening, outside the cylindrical chamber. This blade is configured to cut the output bioplastic material into the aforesaid pellets. The length of the pellets can be regulated by setting the cutting frequency of the blade.

According to a second embodiment of the invention, which is an alternative to the first embodiment, the machinery 1 comprises a shredder (not shown in the enclosed figures). This shredder comprises a plurality of blades configured to pulverize the dry bioplastic material.

According to a third embodiment of the invention, which is an alternative to the first and second embodiments, the machinery 1 comprises an injection moulding device (not shown in the enclosed figures), which is in itself known to the person skilled in the art. The injection moulding device allows the bioplastic material to be moulded into articles. In other words, the injection moulding device is configured to mould bioplastic material into artefacts. For example, the injection moulding device corresponds to an injection press.

According to a fourth embodiment of the invention, which is an alternative to the first, second and third embodiments of the invention, the machinery 1 comprises a film preparation device (not shown in the enclosed figures), which is in itself known to the person skilled in the art, and configured to shape the bioplastic material into a film. For example, the film preparation device corresponds to a filming machine, a calendering machine or a thermoforming machine.

According to a fifth embodiment of the invention, which is an alternative to the first, second, third and fourth embodiments of the invention, the machinery 1 comprises a blow moulding machine configured to mould bioplastic material in the form of containers.

According to a preferred aspect, the machinery 1 includes a dryer (not shown in the enclosed figures). This dryer is preferably arranged in the first cavity 21. The dryer comprises a temperature-controlled air flow generator. The generator is configured to generate an airflow at a temperature between 20°C and 80°C, preferably between 25°C and 40°C, preferably equal to 25°C.

A method for producing a casein-based bioplastic material, obtained in particular from a dairy waste, and using the above-described machinery 1, is herein described for exemplary purposes.

It should be noted that dairy waste preferably means a waste liquid from the production of mammalian milk (e.g. colostrum, skimmed milk, semi-skimmed milk, UHT milk and mixtures of the above) and which is discarded because it does not meet the requirements that make it fit for sale.

Initially, the machinery 1 is maintained in the first configuration and the method comprises the step of inserting the dairy waste into the second cavity 31 and heating, by means of the thermostat 8, such dairy waste up to a temperature of between 10° and 100°C, preferably between 40 and 80°C, more preferably of 60°C.

Once the desired temperature value has been reached, the method comprises the step of inserting into the second cavity 31 via a respective introduction channel 6 and a respective doser 7 a measured volume of hydrated gelatin, selected on the basis of the total rejection volume.

Next, the method involves mixing the solution which is present in the second cavity 31 using stirring means.

Thereafter, the method comprises the step of inserting by means of a further inlet channel 6 and a respective further doser 7 a suitable volume of an acid, which promotes the formation of a precipitate by lowering the pH of the solution present in the second cavity 31 to values between 3 and 6 pH units, preferably between 4 and 5 pH units, more preferably of 4.5 pH units. It must be noted that this acid can be selected from organic or inorganic acids known to the person skilled in the art. Preferably the acid is of organic nature and more preferably it is acetic acid.

The method therefore provides the step of restoring the temperature value of the first cavity 21 to the ambient temperature value.

Next, the method comprises the step of switching the machinery 1 from the first configuration to the second configuration. In other words, by switching the machinery 1 from the first to the second configuration, the second container 3 is moved from the first to the second position, i.e. it is raised relative to the first bottom 21. While lifting the second container 3, the precipitate is retained by the filter 34, while the waste liquid passes from the second cavity 31 to the first cavity 21 via the filter 24.

The method thus comprises the step of operating the tap 25 to let the waste liquid flow out of the first container 2 and hence out of the machinery 1.

Subsequently, the method optionally comprises the step of inserting a washing solution, such as water, into the inner container 31, allowing it to flow out into the first cavity 21 via the filter 34 and from here out of the second container 2 via the discharge outlet 24.

At this point, the method comprises the step of operating the piston 41, i.e., moving the piston 41 closer to the second bottom 32, so as to compress the bioplastic formed in the second cavity 31 and eliminate waste products from the resulting bioplastic.

According to a first embodiment of the method, after the step of operating the piston 41, the method comprises the step of moving the piston 41 away from the second bottom 32 in order to extract the resulting bioplastic material from the second cavity 31.

Still according to the first embodiment of the method, after extracting the resulting bioplastic material from the second cavity 31, the method comprises the step of moulding the resulting bioplastic material by means of the extruder or by means of the injection moulding device or alternatively by means of the film production device.

Still according to the first embodiment of the method, after the step of moulding the resulting bioplastic material, the method comprises the following steps:
- placing the moulded bioplastic material inside the second cavity 31;
- hitting the moulded bioplastic material with an airflow produced by the air flow generator;
- operating the piston 41 to compress the moulded bioplastic material with a pressure between 1000 and 3 · 10⁸ Pa;
- move the piston 41 away from the second bottom 32 in order to extract the moulded and dried bioplastic material from the second cavity 31.

According to a second embodiment of the method, alternative to the first embodiment of the method, after the step of operating the piston 41, the method comprises the following steps:
- moving the piston 41 away from the second bottom 32;
- hitting the bioplastic material contained within the second cavity 31 with the air flow produced by the air flow generator;
- operating the piston 41 to compress the bioplastic material with a pressure between 1000 and 3 · 10⁸ Pa;
- moving the piston 41 away from the second bottom 32 in order to extract the dry bioplastic material from the second cavity 31.

Still according to the second embodiment of the method, after extracting the dried bioplastic material from the second cavity 31, the method comprises the step of moulding said dried bioplastic material to obtain pellets or by means of the shredder to obtain powder of dried bioplastic material.

## Claims

1. Machinery (1) for producing bioplastic material, said machinery (1) comprising:
- a first container (2) having a first cavity (21) extending between a first bottom (22) and an opposite first opening (23) along a longitudinal direction (X-X);
- a second container (3) arranged inside the first cavity (21) and defining a second cavity (31) configured to receive and contain reagents and washing solutions for the production of the bioplastic material, the second container (3) comprises a filter (34), the filter (34) is configured to place the second cavity (31) and the first cavity (21) in fluid communication;
**characterised in that:**
- the machinery (1) comprises a support (4) associated with the first container (2) and comprising a piston (41), said piston (41) being movable along the longitudinal direction (X-X) to compress the bioplastic material produced in the second cavity (31) after the insertion of the reagents and of the washing solutions into said second cavity (31) so as to eliminate through the filter (34) waste products from the produced bioplastic material when the first (21) and the second cavity (31) are in fluid communication with each other.

2. Machinery (1) according to claim 1, wherein the support (4) comprises stirring means which can be inserted in the second cavity (31) and configured to mix the reagents that can be contained in the second cavity (31).

3. Machinery (1) according to claim 2, wherein the support (4) is movable between a first alignment position in which the stirring means are aligned with the second cavity (31) and a second alignment position in which the piston (41) is aligned with the second cavity (31).

4. Machinery (1) according to any one of claims 1 to 3, wherein the support (4) comprises one or more tools for controlling the production of the bioplastic material.

5. Machinery (1) according to any one of claims 1 to 4, wherein said machinery (1) comprises movement means (5), said movement means (5) being configured to move the second container (3) along the longitudinal direction (X-X) and to rotate said second container (3) around the longitudinal direction (X-X).

6. Machinery (1) according to any one of claims 1 to 5, wherein:
- the second cavity (31) extends between a second bottom (32) and an opposite second opening (33) along the longitudinal direction (X-X);
- the filter (34) being arranged at the second bottom (32).

7. Machinery (1) according to any one of claims 1 to 6, wherein the first container (2) comprises a discharge outlet (24) in fluid communication with the first cavity (21) and a tap (25) associated with the discharge outlet (24), said discharge outlet (24) being configured to receive the waste products of the production of the bioplastic material and to convey said waste products outside the first container (2) when said tap ( 25) is operated.

8. Machinery (1) according to any one of claims 1 to 7, comprising:
- at least one introduction channel (6) in fluid communication with the second cavity (31), said introduction channel (6) being configured to introduce one or more reagents and washing solutions inside the second cavity (31);
- at least one doser (7) associated with the introduction channel (6), said doser (7) being configured to regulate the quantity of reagents and washing solutions to be inserted in the second cavity (31).

9. Machinery (1) according to any one of claims 1 to 8, comprising a thermostat (8), said thermostat (8) being configured to regulate the temperature level inside the first cavity (21).

10. Machinery according to any one of claims 1 to 9, comprising a cover (26) configured to reversibly close the first opening (23).

11. Machinery (1) according to any one of claims 1 to 10, comprising an extruder for producing pellets.

12. Machinery (1) according to any one of claims 1 to 10, comprising a shredder comprising a plurality of blades configured for pulverizing dry bioplastic material.

13. Machinery (1) according to any one of claims 1 to 10, comprising an injection moulding device configured to mould bioplastic material into articles.

14. Machinery (1) according to any one of claims 1 to 10, comprising a film preparation device configured to shape bioplastic material in the form of a film.
